# EUROPÄISCHE PATENTSCHRIFT

(11) **EP 0 947 024 B1**
(45) Veröffentlichungstag und Bekanntmachung des Hinweises auf die Patenterteilung: **03.04.2002**
(21) Anmeldenummer: 97951098.9
(22) Anmeldetag: 26.11.1997
(51) Int. Cl.: H01M 8/04, H01M 8/24

(54) **FLÜSSIGKEITSGEKÜHLTE BRENNSTOFFZELLENBATTERIE**
LIQUID-COOLED FUEL CELL BATTERIES
BATTERIE DE PILES A COMBUSTIBLE A REFROIDISSEMENT LIQUIDE

(30) Priorität: 29.11.1996 DE 19649691
(43) Veröffentlichungstag der Anmeldung: 06.10.1999
(73) Patentinhaber: SIEMENS AKTIENGESELLSCHAFT, 80333 München (DE)
(72) Erfinder: BUCHNER, Peter, D-91332 Heiligenstadt (DE); VON HELMOLT, Rittmar, D-91052 Erlangen (DE); WAIDHAS, Manfred, D-90427 Nürnberg (DE)
(86) Internationale Anmeldenummer: DE9702766
(87) Internationale Veröffentlichungsnummer: WO9824138

(56) Entgegenhaltungen:
- US-A- 5 262 249
- PATENT ABSTRACTS OF JAPAN vol. 011, no. 257 (E-534), 20.August 1987 -& JP 62 066581 A (HITACHI LTD), 26.März 1987,
- PATENT ABSTRACTS OF JAPAN vol. 011, no. 249 (E-532), 13.August 1987 -& JP 62 061276 A (INOUE JAPAX RES INC), 17.März 1987,
- PATENT ABSTRACTS OF JAPAN vol. 012, no. 449 (E-686), 25.November 1988 -& JP 63 178455 A (FUJI ELECTRIC CO LTD), 22.Juli 1988,
- PATENT ABSTRACTS OF JAPAN vol. 009, no. 173 (E-329), 18.Juli 1985 -& JP 60 044966 A (MITSUBISHI DENKI KK), 11.März 1985,
- PATENT ABSTRACTS OF JAPAN vol. 011, no. 355 (E-558), 19.November 1987 -& JP 62 131478 A (FUJI ELECTRIC CO LTD), 13.Juni 1987,
- PATENT ABSTRACTS OF JAPAN vol. 018, no. 658 (E-1643), 13.Dezember 1994 -& JP 06 260205 A (MITSUBISHI HEAVY IND LTD), 16.September 1994, -& DATABASE WPI Derwent Publications Ltd., London, GB; AN 94-336131 XP002063088

## Beschreibung

Die Erfindung betrifft eine Batterie aus zumindest zwei Brennstoffzellen, die jeweils eine negative Polplatte, eine Membran-Elektroden-Einheit und eine positive Polplatte, die durch ein Rahmenelement mechanisch fest, gasdicht und elektronisch isolierend miteinander verbunden sind, umfaßt.

Bislang sind derartige Batterien, bei denen jede einzelne Brennstoffzelle der Batterie jeweils eine negative und eine positive Polplatte hat, beispielsweise aus der DE-PS 44 42 285 bekannt, jedoch ist das Problem der Flüssigkeitskühlung derartiger Brennstoffbatterien bislang nicht gelöst. Für stationäre Anwendungen, bei denen die Abwärme genutzt werden soll, ist ein flüssiges Kühlmedium wünschenswert, um die erforderlichen Wärmetauscher und die Verteilung der Wärme kompakt zu halten.

Es sind flüssigkeitsgekühlte Brennstoffzellenbatterien bekannt, die jedoch jeweils nur am positiven und am negativen Ende der Batterie einzelne Kontakt- oder Polplatten enthalten. Innerhalb der Batterie werden diese einzelnen Kontakt- oder Polplatten durch sog. Bipolarplatten ersetzt, die oft hohl ausgestaltet sind. Das flüssige Kühlmedium der bekannten flüssigkeitsgekühlten Batterien befindet sich in den Hohlräumen der Bipolarplatten. Die bislang bekannten Bipolarplatten grenzen einerseits an den Anodenraum und andererseits an den Kathodenraum der einzelnen aneinander anschließenden Brennstoffzellen an. Beim Zusammenbau einer herkömmlichen Batterie werden dann die Bipolarplatten mit den Membran-Elektroden-Einheiten der einzelnen Brennstoffzellen aufeinandergestapelt und durch Schraubenbolzen, Zuganker oder andere Spannvorrichtungen mechanisch miteinander verbunden. Jeweils am Ende befindet sich dann eine einzelne Pol- oder Kontaktplatte. Dieses System wird auch als Filterpressentechnik bezeichnet (siehe beispielsweise W.Vielstich aus "Brennstoffelemente", Verlag Chemie GmbH 1965, Seiten 171 und 201/202).

Ein wesentlicher Nachteil der Filterpressentechnik ist, daß an die Randabdichtungen der Brennstoffzellenbatterie sehr hohe Anforderungen gestellt werden müssen, weil die jeweiligen Reaktionsmedien, also Oxidans, Brennstoff und Kühlmedium zuverlässig gegeneinander abgedichtet werden müssen. An den Rändern der Bipolarplatten ist z.B. bislang eine besonders heikle, direkte Abdichtung ohne Pufferbereich erforderlich, die sicherstellen muß, daß Oxidans und Brennstoff nicht ineinander überfließen können. Es versteht sich von selbst, daß sich derartige Anforderungen an die Randabdichtungen in den Herstellungskosten der Batterien niederschlagen. Es besteht deshalb der Bedarf, die bislang bekannte Filterpressentechnik nicht nur bei luftgekühlten Brennstoffzellen, wie in der oben zitierten DE-PS 44 42 285 offenbart, zu überwinden, sondern auch bei flüssigkeitsgekühlten Brennstoffzellenbatterien.

Aufgabe der vorliegenden Erfindung ist es daher, eine flüssigkeitsgekühlte Batterie aus Brennstoffzellen zur Verfügung zu stellen, die ohne direkte Randabdichtung zwischen Kathoden- und Anodenraum konstruiert ist.

Allgemeine Erkenntnis der Erfindung ist, daß dies bei Verwendung des in der DE-PS 44 42 285 offenbarten Prinzips der Einzelabdichtung der Brennstoffzelleneinheiten einer Batterie dann möglich ist, wenn eine daraus hergestellte Batterie in ein Kühlflüssigkeitsbad eingetaucht wird.

Gegenstand der Erfindung ist eine Batterie mit Flüssigkeitskühlung aus zumindest zwei Brennstoffzellen, die jeweils eine negative Polplatte, eine Membran-Elektroden-Einheit und eine positive Polplatte, die durch ein Rahmenelement mechanisch fest, gasdicht und elektronisch isolierend miteinander verbunden sind, umfassen, wobei die Batterie in ein Kühlflüssigkeitsbad eingetaucht ist.

Weiterhin ist Gegenstand der vorliegenden Erfindung ein Verfahren zur Kühlung einer Brennstoffzellenbatterie, bei dem die Batterie durch Eintauchen in ein Kühlflüssigkeitsbad gekühlt wird.

Weitere vorteilhafte Ausgestaltungen der Erfindung ergeben sich aus den Unteransprüchen, der Beschreibung, den Figuren und den Erläuterungen dazu.

Bei einer Ausführungsform der Erfindung und des erfindungsgemäßen Verfahrens wird die Batterie vollständig in ein Kühlflüssigkeitsbad eingetaucht.

Bei einer vorteilhaften Ausgestaltung der Erfindung ist der Behälter für das Kühlflüssigkeitsbad im Batteriegehäuse so integriert, daß das Batteriegehäuse selbst nicht mehr von flüssigem Kühlmittel umgeben ist.

Die Elektrolytmembran, die das Herzstück der Membran-Elektroden-Einheit der Brennstoffzelle ist, erstreckt sich bis zum Rand der Zelle und könnte bei der Verwendung von Wasser als Kühlmedium ausgewaschen werden. Deshalb ist bei einer vorteilhaften Ausgestaltung der Erfindung vorgesehen, daß nicht Wasser, sondern eine hydrophobe, d.h. wasserabweisende, Kühlflüssigkeit (beispielsweise Öl oder Trafoöl) eingesetzt wird, welche die Membran nicht benetzt. Alternativ zu dieser vorteilhaften Ausgestaltung kann das Auswaschen der Elektrolytmembran durch Wasser als Kühlmedium dadurch vermieden werden, daß bei der Einzel-Abdichtung der Membran-Elektroden-Einheit durch das Rahmenelement eine Dichtung verwendet wird, wie sie beispielsweise von der Firma Gore in Verbindung mit der Membran-Elektrolyt-Einheit angeboten wird und die diesen Auswascheffekt ausschließt. Die Kosten für eine solchermaßen aufgebaute Batterie liegen trotzdem noch unter den Kosten für die Abdichtungen der bereits bekannten Bipolarplatten.

Es ist vorteilhaft, wenn die Kühlflüssigkeit durch das Kühlflüssigkeitsbad strömt. Dabei kann die Strömung ausschließlich durch Konvektion bewirkt werden.Die Strömung kann auch je nach Bedarf durch eine Pumpe erzeugt oder die Konvektion durch eine Pumpe verstärkt werden.

Es ist von Vorteil, wenn die im Kühlflüssigkeitsbad bestehende Strömung so reguliert wird, daß sie sich gleichmäßig auf die gesamte Brennstoffzellenbatterie verteilt. Dies kann über einen Kühlmittelverteiler geschehen.

Bei einer vorteilhaften Ausgestaltung des Verfahrens sind die Strömungsgeschwindigkeiten und/oder die Strömungsverteilung des Kühlmittels im Kühlflüssigkeitsbad regelbar. Das ist besonders praktisch, wenn die Batterie verschiedenen Leistungsanforderungen gerecht werden soll und dadurch bedingt einen zeitlich unterschiedlichen Kühlbedarf hat.

Als "Batterie" wird hier ein Aggregat oder Stack aus zumindest zwei, in Serie geschalteten, einzelnen Brennstoffzellen bezeichnet. Eine mögliche Anwendung einer solchen Batterie ist beispielsweise die dezentrale Stromerzeugung, bei der Aggregate mit einer weitaus höheren Anzahl an einzelnen Brennstoffzellen eingesetzt werden. So muß eine Batterie z.B. für die Anwendung in einer Hausenergieversorgungsanlage für ein Einfamilienhaus eine Leistung von ca. 10 kW bringen. Bei einer angenommenen Zellfläche von ca. 300 cm² und einer Leistung von ca. 100 Watt pro einzelner Brennstoffzelle berechnet sich entsprechend eine dort einsetzbare Batterie zu etwa 100 Einzelzellen.

Als "einzelne Brennstoffzelle" oder "Brennstoffzelleneinheit der Batterie" werden hier bevorzugt die Brennstoffzellen, die in der bereits oben zitierten DE-PS 44 42 285 offenbart werden, bezeichnet. Auf diese Patentschrift wird hiermit voll inhaltlich bezug genommen und deren gesamter Offenbarungsinhalt wird zum Gegenstand der vorliegenden Beschreibung gemacht. Die genannten Brennstoffzellen sind einzeln handhabbare Einheiten, die jeweils eine negative Polplatte, eine Membran-Elektroden-Einheit und eine positive Polplatte umfassen, wobei die obengenannten Bestandteile jeweils durch ein Rahmenelement mechanisch fest, gasdicht und elektronisch isolierend miteinander verbunden sind.

Als "Membran-Elektroden-Einheit" wird vorliegend eine Membran mit jeweils einer negativen und einer positiven Elektrode bezeichnet. Unter den Begriff "Membran-Elektroden-Einheit" fallen alle derartigen Einheiten, die in dieser Technik üblich sind. Bevorzugt reichen die Elektroden nicht bis an den Rand der Membran hin, sondern lassen einen Randbereich der Membran frei, so daß von einem Rahmenelement der Brennstoffzelle lediglich die positive und negative Polplatte der Brennstoffzelle sowie die Membran selbst, umfaßt werden.

Als "Rahmenelement" wird grundsätzlich jedes Teil bezeichnet, das geeignet ist, zumindest negative Polplatte, Membran und positive Polplatte und ggf auch die Elektroden oder weitere Bestandteile der einzelnen Brennstoffzelle, mechanisch fest, gasdicht und elektronisch isolierend miteinander zu verbinden. Das Rahmenelement kann aus einem Stück bestehen, es kann aber auch z.B. aus mehreren Teilen zusammengesetzt sein. Bevorzugt besitzt das Rahmenelement einen U-Profil-Querschnitt, wobei die beiden U-Schenkel die beiden Polplatten mit der Membran zusammendrücken und so das Innere dieser Einheit gasdicht gegenüber dem Eindringen von Gasen abschließen. Das Rahmenelement entspricht dem Rahmenelement, das in der oben genannten DE-PS 44 42 285 beschrieben wurde.

Bevorzugt verfügt jede der Brennstoffzellen über zumindest vier durchgehende Versorgungs- oder Entsorgungsöffnungen, die innerhalb einer Batterie jeweils miteinander verbunden sind.

Bei der Stapelung zumindest zweier erfindungsgemäßer Brennstoffzellen zu einer Batterie ergibt sich bevorzugt ein direkter mechanischer und elektronischer Kontakt der negativen Polplatte der einen Brennstoffzelle mit der positiven Polplatte der nächsten Brennstoffzelle. Damit sind die beiden Zellen elektrisch in Serie geschaltet. Der direkte mechanische und elektronische Kontakt findet z.B. -falls vorhandenentlang der vier Versorgungs- und Entsorgungsöffnungen statt. Dabei sind die negativen und positiven Polplatten der zwei aneinandergrenzenden Brennstoffzellen so geformt, daß zwischen den vollständig gestapelten und mechanisch und elektronisch in direktem Kontakt stehenden Brennstoffzellen ein Zwischen- oder Hohlraum bestehen bleibt, durch den Kühlmedium durchströmen kann.

Beim Eintauchen der Batterie oder des Brennstoffzellenstapels in ein Kühlflüssigkeitsbad strömt z.B. die Kühlflüssigkeit durch diese Hohlräume hindurch. Der Durchfluß des flüssigen Kühlmittels verläuft dann analog zu der Luftströmung bei der überwiegend luftgekühlten Variante einer Brennstoffzellenbatterie, die aus der bereits oben zitierten Patentschrift bekannt ist.

Die Strömungsgeschwindigkeit kann im Kühlflüssigkeitsbad über eine Pumpe geregelt werden. Dabei reicht bei Flüssigkeiten mit hoher Wärmekapazität eine geringe Strömungsgeschwindigkeit bereits aus, um eine gute Kühlleistung zu erzielen. Vorteilhaft sind Verwirbelungen, die im Strom des Kühlmediums erzeugt werden, weil damit die nicht Substrat-spezifische Wärmekapazität des Kühlmediums erhöht wird. In diesem Zusammenhang wird auf die Anmeldung mit dem amtl. Aktz. 19635901.5 verwiesen, deren technische Lehre sich für die Anwendung im Rahmen der vorliegenden Erfindung eignet.

Die Strömungsverteilung kann durch einen Kühlmittelverteiler, der am Einlaß des flüssigen Kühlmediums angebracht ist und der den einheitlichen Strom an Kühlmedium am Einlaß aufteilt, geregelt werden. Der Kühlmittelverteiler dient dazu, daß die Brennstoffzellenbatterie gleichmäßig mit Kühlflüssigkeit versorgt wird.

Die Strömungsgeschwindigkeit des Kühlmittels innerhalb des Flüssigkeits- und Kühlbades ist durch die Pumpe und die Strömungsverteilung regelbar.

Unter "hydrophob" wird die Eigenschaft eines Mediums verstanden, wasserabweisend zu wirken. Unter einer hydrophoben Kühlflüssigkeit werden alle die Kühlmedien verstanden, die sich in Wasser nicht lösen, also nicht geeignet sind, die wassergetränkte Membran zu benetzen und dadurch auszuwaschen.

Die Pumpe, mit der ggf die Strömung des Kühlmediums verstärkt wird, kann jede beliebige Pumpe sein, mit der Flüssigkeit so angesaugt, unter Druck gesetzt oder verdichtet wird, daß eine Strömung entsteht. Die Anordnung der Pumpe im Gesamtsystem ist beliebig und kann dem eigentlichen Kühlflüssigkeitsbad sowohl vor- als auch nachgeschaltet sein.

Das Kühlflüssigkeitsbad befindet sich in einem flüssigkeitsdichten Behälter. Dieser ist bevorzugt mit zumindest zwei permanenten Öffnungen versehen, einer am Einlaß und einer am Auslaß des Kühlmediums. Er kann jedoch auch viele Öffnungen aufweisen, dann wird in der Regel ein Kühlmittelverteiler überflüssig.

Im folgenden wird die Erfindung anhand von zwei Figuren näher beschrieben.

Figur 1 zeigt die Ausgestaltung der erfindungsgemäßen Batterie bei der der Behälter für das Kühlflüssigkeitsbad in das Batteriegehäuse integriert ist.

Figur 2 zeigt die Ausgestaltung der erfindungsgemäßen Batterie bei der die Strömung im Kühlflüssigkeitsbad über einen Kühlmittelverteiler verteilt wird.

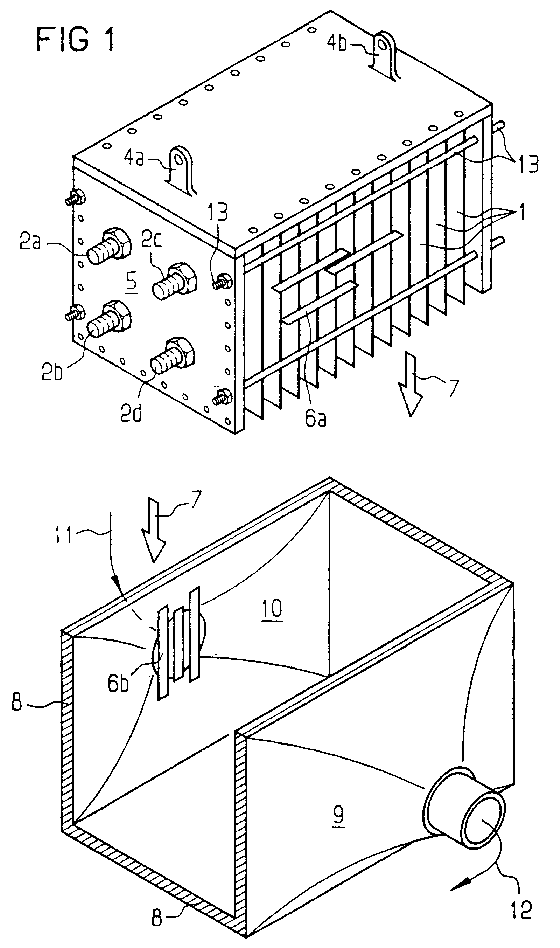

Figur 1 zeigt das Bild einer erfindungsgemäßen Batterie aus einem Stapel einzelner, jeweils eine handhabbare Einheit bildenden, Brennstoffzellen 1, die über vier durchgehende Versorgungs- oder Entsorgungsöffnungen 2a, 2b, 2c und 2d verfügen. Die Batterie wird von einem sechsseitigen quaderförmigen Batteriegehäuse umschlossen. Die Figur zeigt die Batterie vor dem Zusammenbau, dessen Richtung durch die Pfeile 7 gezeigt wird. Der Zusammenbau kann durch jede flüssigkeitsdichte Verbindung der beiden Teile erfolgen.

In der oberen Hälfte der Figur 1 sieht man die Oberseite 3 des Batteriegehäuses mit den beiden Stromabnehmern 4a und 4b sowie die Seite 5 des Batteriegehäuses mit den End- und Versorgungsöffnungen 2a bis 2d. Der Stapel von Brennstoffzellen 1 wird beispielsweise durch Schraubverschlüsse oder Zuganker 13, die, wiederum beispielsweise, über ein Schraubengewinde an der Oberseite 3 und der Unterseite (nicht gezeigt) justiert werden, zusammengehalten. Die End- oder Versorgungsöffnungen 2a bis 2d sind mit Axialkanälen verbunden, die sich über den gesamten Zellstapel hinweg erstrecken.

Beim Betrieb der Batterie wird beispielsweise das Oxidans über die Versorungsöffnung 2b zugeführt und dann durch den anschließenden Axialkanal durch den gesamten Brennstoffzellenstapel der Batterie, mit jeweils Öffnungen zu den einzelnen Kathodenräumen hin, geführt. Das in den einzelnen Kathodenräumen der Batterie verbrauchte Oxidans kann den Zellstapel über den ebenfalls durchgehenden Entsorgungskanal durch die Entsorgungsöffnung 2c wieder verlassen. Im obengenannten Beispiel wird dann der Brennstoff entsprechend über die Versorgungsöffnung 2a zugeführt und über die Entsorgungsöffnung 2d abgeleitet.

Quer zum Zellstapel sind die Diffusoren 6a eingezeichnet, mit deren Hilfe das Kühlmittel im Kühlflüssigkeitsbad verteilt werden kann. Die Anbringung der Diffusoren ist nicht unbedingt erforderlich, sondern kann jeweils bei Bedarf und je nach Ausgestaltung der Erfindung in der Batterie enthalten sein oder nicht.

Beim Zusammenbau der Batterie wird die obere Hälfte der Figur 1 in die untere Hälfte der Figur 1 wie durch die Pfeile 7 angedeutet, hineingesteckt, wobei die Kanten der Seiten 3 und 5 des Batteriegehäuses auf die in der unteren Hälfte der Figur 1 gezeigten Dichtfläche 8 entlang der angrenzenden Kanten des Batteriegehäuses treffen. Durch die Dichtfläche 8 ist gewährleistet, daß der Behälter flüssigkeitsdicht ist.

An den beiden Seiten 9 und 10 des Flüssigkeitsbehälters und Batteriegehäuses ist die Eintrittsöffnung 11 und die Austrittsöffnung 12 des Kühlmittels zu erkennen. Direkt im Anschluß an die Eintrittsöffnung 11 verfügt das Batteriegehäuse noch über weitere Diffusoren 6b, die quer zu den Diffusoren 6a, die in der oberen Hälfte der Figur 1 gezeigt sind, stehen. Die Diffusoren helfen, wie bereits erwähnt, zur gleichmäßigen Verteilung des Kühlmittels im Kühlflüssigkeitsbad. Die Stellung der Diffusoren ist dabei beliebig und in der Figur 1 wird eine exemplarische Anordnung gezeigt.

Die Tatsache, daß in beiden Figuren die Batterie als quaderförmig und damit sechsseitig dargestellt ist, dient lediglich zur Vereinfachung und Veranschaulichung der erfindungsgemäßen Batterie. Diese Ausgestaltung ist zwar eine bevorzugte Ausführungsform, aber die Erfindung soll keineswegs auf diese Form der Batterie beschränkt sein, sondern kann vielmehr auch alle Arten von Batterien in anderen geometrischen Formen umfassen.

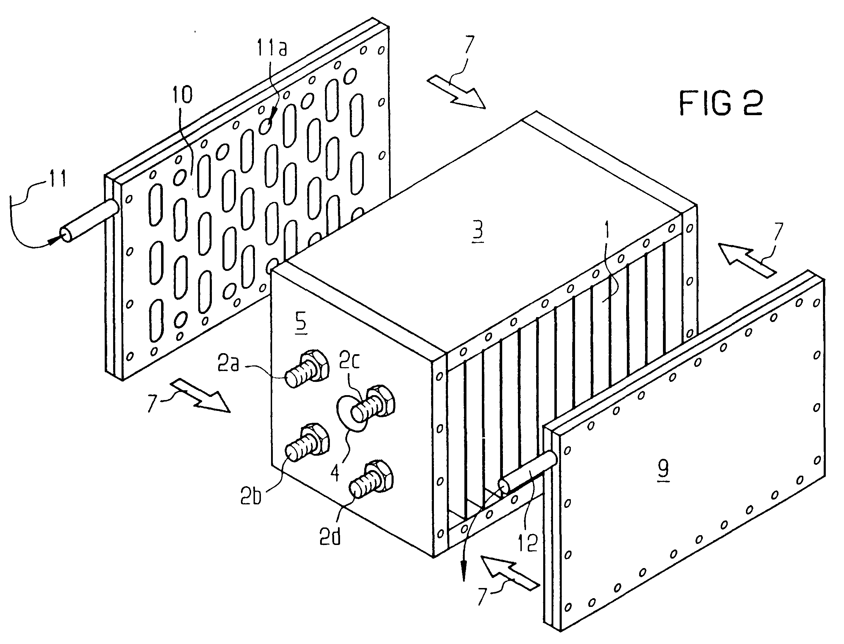

Figur 2 zeigt eine Ausgestaltung der Erfindung mit einem Kühlmittelverteiler. Dabei wird der Kühlmittelverteiler im Batteriegehäuse so integriert, daß eine kompaktere Bauform erreicht wird. In der Mitte der Figur 2 erkennt man wieder den Stapel aus einzelnen Brennstoffzellen 1, aus dem die Batterie aufgebaut ist. Ebenso erkennt man die Vorderfläche 5 des Batteriegehäuses mit den vier Ent- und Versorgungsöffnungen 2a, 2b, 2c und 2d, durch die die Reaktionsgase durch den Brennstoffzellenstapel geleitet und die verbrauchten Reaktionsgase aus dem Brennstoffzellenstapel abgeleitet werden. Ebenfalls auf der Seite 5 der quaderförmigen und deshalb sechsseitigen Batterie befindet sich die Stromabnahme 4.

Die Seite 10 der Batterie zeigt an ihrer nach vorne gerichteten Kante die Kühlflüssigkeitseinlaßöffnung 11. In diese Seite 10 der in Figur 2 dargestellten Batterie ist ein Kühlflüssigkeitsverteiler derart integriert, daß das Kühlmittel durch die verschiedenen Öffnungen 11a, die sich innen auf dieser Seite befinden, in den Brennstoffzellenstapel 1 strömt. Die Öffnungen 11a des Verteilers sind so gestaltet, daß die Kühlflüssigkeit eine möglichst gleichmäßige Verteilung entlang des gesamten Brennstoffzellenstapels erfährt. Seite 9 der in Figur 2 dargestellten Batterie zeigt wiederum an ihrer nach außen gerichteten Kante die Kühlflüssigkeitsauslaßöffnung 12, durch die verbrauchtes Kühlmittel das Kühlflüssigkeitsbad, in dem die Batterie steckt, wieder verläßt. Nicht zu sehen ist die Innenseite der Seite 9 des erfindungsgemäßen Batteriegehäuses das in Figur 2 dargestellt ist und die beispiels- aber nicht notwendigerweise über dieselbe Verteilung von Öffnungen 11a, die als Auslaß dienen, verfügt, wie die Seite 10. Schließlich ist auch Figur 2 noch durch die vier Pfeile 7 angezeigt, wie die Batterie zusammengebaut wird.

Es soll nochmals betont werden, daß die Figuren lediglich bevorzugte Ausführungsformen der erfindungsgemäßen Batterie beschreiben und insbesondere bezüglich ihrer geometrischen Darstellung, die stark vereinfacht ist, keineswegs den Umfang der Anmeldung beschränken sollen. Vielmehr ist die vorliegende Erfindung an keinerlei geometrische Gestaltung gebunden, sondern gilt ganz allgemein für Batterien aus Brennstoffzellen, bei denen jeweils die einzelnen Brennstoffzellen einzeln handhabbare Einheiten darstellen und die durch Eintauchen in ein Kühlflüssigkeitsbad, gegebenenfalls mit dazugehöriger Strömung der im Kühlflüssigkeitsbad befindlichen Flüssigkeit, ausreichend gekühlt werden können. Insbesondere kann die erfindungsgemäße Batterie auf besonders heikle Dichtungen zwischen Kathoden- und Anodenraum, wie oben bereits erwähnt, verzichten.

Erfindungsgemäß ist das Batteriegehäuse oder das Kühlflüssigkeitsbad, in das die Batterie teilweise oder vollständig zur Kühlung eingetaucht wird, derartig gestaltet, daß ein Testen des Brennstoffzellenstapels sowie ein Testen der einzelnen Gasleitungen während des Betriebs, also bei laufender Kühlung möglich ist, so daß z.B. defekte Zellen oder Leckagen aufgefunden werden können und die Fehler behoben werden können, während die Batterie sich im Kühlflüssigkeitsbad befindet. Da alle Abdichtungen der Reaktionsgasräume in der bereits oben zitierten DE-PS 44 42 285 in den Außenraum führen, der in diesem Fall das Kühlflüssigkeitsbad darstellt, können nämlich Gasleckagen leicht durch die austretenden Gasblasen gefunden werden. Da die Zellen in der beschriebenen Batteriekonstruktion einzeln gut zugänglich gemacht werden können, besteht durch eine einfache Spannungsmessung außerdem eine Möglichkeit zum Aufspüren von defekten Zellen.

## Patentansprüche

1. Batterie mit Flüssigkeitskühlung aus zumindest zwei Brennstoffzellen, die jeweils eine negative Polplatte, eine Membran-Elektroden-Einheit und eine positive Polplatte, die durch ein Rahmenelement mechanisch fest, gasdicht und elektronisch isolierend miteinander verbunden sind, umfassen, und in ein Kühlflüssigkeitsbad eingetaucht sind, wobei mit einer Pumpe und/oder mit einem Flüssigkeitsverteiler eine Strömung im Kühlflüssigkeitsbad erzeugt wird.

2. Batterie nach Anspruch 1, bei der der Behälter für das Kühlflüssigkeitsbad im Batteriegehäuse integriert ist.

## Claims

1. Battery with liquid cooling composed of at least two fuel cells that comprise respectively a negative pole plate, a membrane electrode unit and a positive pole plate, which are connected to one another in a mechanically fixed, gas-tight and electronically insulating manner by a frame element, and are immersed in a coolant bath, a flow being generated in the coolant bath by a pump and/or a liquid distributor.

2. Battery according to claim 1, in which the container for the coolant bath is integrated into the battery housing.

## Revendications

1. Batterie à refroidissement par du liquide, constituée d'au moins deux piles à combustible qui ont respectivement une plaque polaire négative, une unité membrane-électrodes et une plaque polaire positive, qui sont reliées entre elles par un élément formant cadre d'une façon solide mécaniquement, étanche aux gaz et isolante du point de vue électronique et qui sont immergées dans un bain de liquide de refroidissement, un courant dans le bain de liquide de refroidissement étant obtenu par une pompe et/ou par un répartiteur de liquide.

2. Batterie suivant la revendication 1, dans laquelle la cuve pour le bain de liquide de refroidissement est intégrée dans l'enveloppe de la batterie.
